# EUROPEAN PATENT APPLICATION

(11) **EP 2 705 984 A1**
(43) Date of publication of application: **12.03.2014**
(21) Application number: 12183220.8
(22) Date of filing: 05.09.2012
(51) Int. Cl.: B60R 7/04, B64D 11/00

(54) **Removable passenger seat element**

(71) Applicant: Airbus Operations GmbH, 21129 Hamburg (DE)
(72) Inventor: Klettke, Marcus, 28357 Bremen (DE)

(57) **Abstract**

A passenger seat element (100) for a seat arrangement (300) is proposed. The passenger seat element (100) comprises a housing (102) with a cavity (130) and a lid (103). The lid is adapted to cover the cavity of the housing in a closed state of the lid and to uncover the cavity in an opened state of the lid. The cavity is adapted to accommodate an object (132) to be accommodated and the passenger seat element is removably attachable to a seat frame (200) of the seat arrangement.

## Description

### Field of the invention

The invention relates to passenger seat design. In particular, the invention relates to a passenger seat element for a seat arrangement, a seat arrangement and an aircraft with such a seat arrangement.

### Technical background of the invention

In aircraft and other means of transportation like trains and busses, overhead bins are used for accommodating hand luggage of passengers and other objects to be accommodated. Due to safety requirements in particular in aircraft, such hand luggage and objects to be accommodated must be stored and kept within closed bins in order to avoid freely movable objects within the passenger cabin in case of heavy flight manoeuvre and/or external impacts to the aircraft like airstreams or air holes. In order to provide a convenient and comfortable accessibility of the bins to the passengers, the bins are often arranged as overhead bins above the passenger's seats.

US 2009/0194635 Al describes an overhead bin for use in a passenger cabin of an aircraft.

WO 2012 041465 Al describes a passenger seat system and the use of a passenger seat system in an aircraft.

### Summary of the invention

It may be seen as the objective technical problem to provide an alternative passenger cabin design and in particular a space saving and weight saving passenger seat element and seat arrangement.

A passenger seat element, a seat arrangement and an aircraft according to the features of the independent claims are proposed. Supplements and additions result from the dependent claims and the following description.

According to a first aspect, a passenger seat element for a seat arrangement is provided, the passenger seat element comprising a housing with a cavity and a lid. The lid is adapted to cover the cavity of the housing in a closed state of the lid and to uncover the cavity in an opened state of the lid. The cavity is adapted to accommodate an object to be accommodated and the passenger seat element is removably attachable to a seat frame of the seat arrangement.

A passenger seat element as described above and hereinafter may in particular be a horizontal aligned element of a seat arrangement, which a passenger may sit on. The lid is a part of the passenger seat element directed toward the passenger and serving as a seat surface.

The lid is adapted to be moved to a closed state and to an opened state. This motion may be facilitated by a rotary element or a lever, which mechanically interconnects the lid and the passenger seat element such that the lid may be moved around a pivot point in order to get from the closed state to the opened state or vice versa. The rotary element or the lever may be a joint or a hinge, for example. In an alternative embodiment, the lid may be adapted to be raised from the housing like a cover and not being mechanically interconnected with the housing.

The cavity may be a storage space or a storage room for goods or commodities belonging to a passenger assigned to a given seat arrangement or seat element. When using the passenger seat element in an aircraft, the cavity may be adapted to receive the hand luggage of a passenger. In this case, the size and the number of the overhead bins in an aircraft may be reduced, minimized or in one embodiment may become utterly superfluous, as the passenger seat elements provide and make available storage room for hand luggage and other objects to be stowed away.

The passenger seat element as described above and hereinafter may be removably attachable to the seat arrangement. In particular, the passenger seat element may be attached to and detached from the seat arrangement without the need to use any tools like a screwdriver or any other assembling tools. The passenger seat element may be attachable to the seat arrangement by a locking mechanism or any other mechanically attachable and detachable locking or interlocking device.

Thus, a seat element may be removed in case a seat is not allocated or assigned to a passenger. This may reduce weight, and in particular in an aircraft may reduce fuel consumption, which is a result of the reduced weight. When removing all of the seat elements in a plane, the total weight of the plane may be reduced by up to a few hundred kilograms. Even when flying with a half booked plane, the total weight savings due to the lack of passenger seat elements from seat arrangements not assigned to a passenger exceed some hundred kilograms.

According to an embodiment, the passenger seat element further comprises a fastening element and a securing element, wherein the passenger seat element is removably attachable to the seat frame by the fastening element and wherein the securing element is adapted to lock the passenger seat element to the seat frame in an attached state.

The fastening element may be adapted to be mechanically engaged with a counterpart element or positioning element located at the seat arrangement or seat frame such that the passenger seat element may be positioned in its intended position. In general, the fastening element and its counterpart may be each suitable and appropriate mechanism for fixing and aligning the passenger seat element relating to the seat arrangement or the seat frame. In an attached state of the passenger seat element, the fastening element and its counterpart are mechanically engaged with each other or mechanically coupled to each other, wherein in a detached state of the passenger seat element, the fastening element and its counterpart are mechanically detached from each other or mechanically uncoupled from each other.

The fastening element may be a rail-skid system or rail-runner system, whereas the rail and the skid or the rail and the runner are adapted to be engaged with each other, respectively. The rail may be part of the fastening system, wherein the skid or the runner may be part of the seat arrangement, or vice versa. In an alternative embodiment, the fastening element may be a holding element or holding nose which is adapted to be laid up or to be supported by a holding surface, which is part of the seat frame.

The securing element is adapted to hold or lock the passenger seat element in its intended position such that the passenger seat element will not move unless it is being unlocked.

According to an embodiment, the passenger seat element further comprises a handle, which is configured to unlock the securing element from the seat frame such that the passenger seat element is removable from the seat frame.

The handle may be mechanically interconnected with the securing element such that the securing element will adopt an unlocked state and the passenger seat element may be removed from the attached state to the detached state in case the handle is being operated.

The handle may comprise safety mechanisms or security mechanisms which may protect the handle against unintended operating. These safety mechanisms may be a protective cap or layer, for example, which has to be pushed or torn aside prior to operating the handle. The safety mechanisms may also be a safety bolt or any other mechanical safety mechanism which protects the handle against unintended actuation.

However, the handle facilitates an attachment or detachment of the passenger seat element from a seat arrangement without any tools or instruments. Thus, an attachment or detachment process occurs within a short period or time slot.

According to a further embodiment, the handle may be a carrying handle, such that the passenger seat element may be carried by a person holding the carrying handle. The carrying handle may in particular be extendable or a telescopic handle.

According to a further embodiment, the passenger seat element may comprise a rolling arrangement such that the passenger seat element may be rolled instead of being carried, for example. The rolling arrangement may be an arrangement enabling the passenger service unit to be pulled or torn when resting or being located on the floor. For example, the rolling arrangement may comprise a pair of rollers or more than one pair of rollers. The rolling arrangement may also comprise a single role.

According to a further aspect, a seat arrangement is provided which comprises a passenger seat element as described above and hereinafter, and a seat frame. The passenger seat element is removably attached to the seat frame and removable by operating the handle and unlocking the securing element from the seat frame.

A seat arrangement is typically composed of a seat frame, a back rest and a seat element. The back rest and the seat element are attached to the seat frame in order to allow a passenger to use the seat arrangement, i.e. to take a seat.

With respect to the seat arrangement and the seat frame as well as to the interaction of the seat frame and the seat arrangement with the passenger seat element, the above given details apply similarly.

A seat arrangement may in particular provide flexibility in means of passenger transportation as the room used for a seat may become standing room or standing place within a few seconds. Thus, the capacity of a passenger room, for example in a train or a bus, may be extended when detaching the passenger seat elements. When used in an aircraft, the flexible attachment and detachment of passenger seat elements may lead to considerable fuel savings and/or range extension.

The seat arrangement as described above and hereinafter may be used in all kind of means of transportation and in particular in transportation of passengers, like busses, trains, ships or aircraft.

According to a further aspect, an aircraft is provided, comprising a seat arrangement as described above and hereinafter.

The aircraft may comprise a multitude of similar or identical seat arrangements as described above or hereinafter. In particular, the seat arrangement may be arranged or located in a passenger cabin of the aircraft.

The seat frame of the seat arrangement may be adapted to affix the seat arrangement to the passenger cabin floor or to a fuselage structure.

Below, embodiments of the invention are described with reference to the drawings.

### Brief description of the drawings

Fig. 1 shows a seat arrangement according to an exemplary embodiment of the invention
Fig. 2 shows a passenger seat element according to another exemplary embodiment of the invention
Fig. 3 shows an aircraft with a seat arrangement according to another exemplary embodiment of the invention

### Detailed description of embodiments

The representations in the drawings are schematically and not to scale. Similar reference signs relate to similar or equal elements.

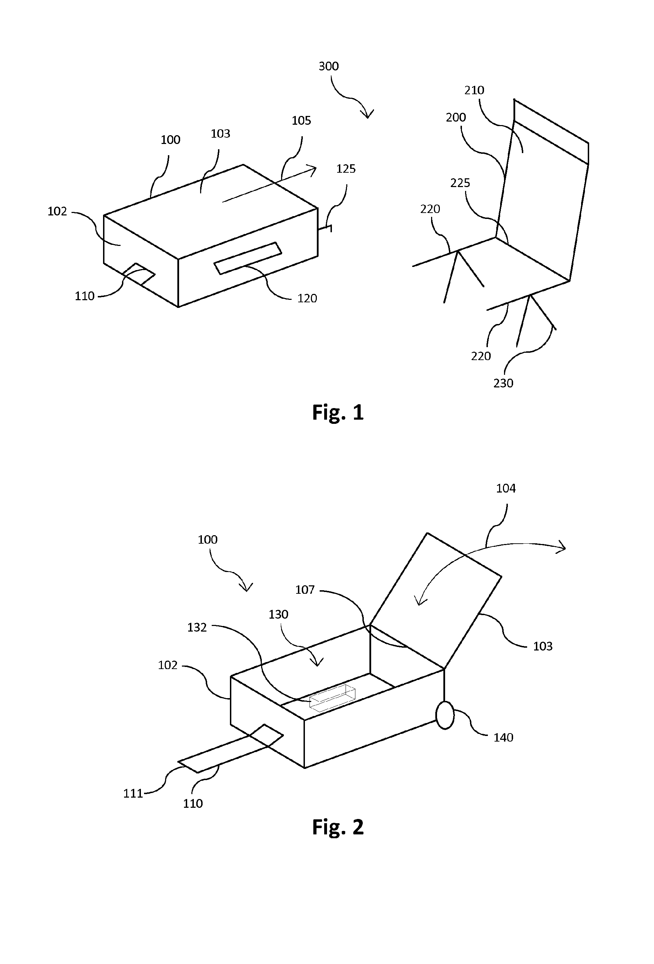

Fig. 1 shows a seat arrangement 300 comprising a passenger seat element 100 and a seat frame 200, wherein the passenger seat element 100 is shown in a detached state with regard to the seat frame.

The seat frame 200 comprises a back rest 210, a lateral support rail 220, a rear support rail or locking rail 225, and a fixing structure. The passenger seat element 100 comprises a housing 102, a lid 103, a handle 110 for operating the securing element 125, and a fastening rail 120. When being moved in direction of the arrow 105 toward the seat frame 200, the passenger seat element is adapted to adopt the attached state, i.e. being attached to the seat frame.

The fastening rail 120 is adapted to be mechanically interconnected with the lateral support rail 220, such that the passenger seat element is being led to an intended fixing position. When moving the passenger seat element in the direction of the arrow 105 toward the back rest 210 of the seat frame 200, the securing element 125 mechanically engages the rear support rail 225. Thus, the passenger seat element is fixed within its attached state by the fastening rail 125 and the lateral support rail 225 and by the securing element 125 and the rear support rail 225, respectively. In the attached state, the passenger seat element may be fixed such that it may not be moved in any direction. In particular, the fixing and locking mechanism built by the fastening rail 120, the securing element 125, the lateral support rail 220, and the rear support rail 225 may be adapted such that the seat arrangement 300 meets special security, stress and/or load-bearing requirements in aircraft.

For adopting the detached state of the passenger seat element, the handle 110 may be actuated, such that the securing element 125 unlocks from the rear support rail 225. Thus, a movement of the passenger seat element opposite to the direction indicated by arrow 105 brings the passenger seat element from the attached state to the detached state. The fastening element 120 and the lateral support rail 220 may be adapted such that a movement of the passenger seat element may be enabled only in the direction of arrow 105, i.e. parallel to the lateral support rail 220 towards the back rest 210 of the seat frame 200, or opposite to the direction of arrow 105, i.e. parallel to the lateral support rail 220 away from the back rest 210 of the seat frame. When enabling only movement along the lateral support rail 220, the passenger seat element may be fixed against movement in any direction by engaging the securing element 125 with the rear support rail.

Fig. 2 depicts in detail a passenger seat element 100, comprising a housing 102, a lid 103, a handle 110, which may be extendable, a roller 140, and a cavity 130 for storing a luggage 132, for example, or any other object to be stored or transported. For the sake of clarity, the securing element and the fastening rail have not been depicted in Fig. 2.

The lid 103 is mechanically interconnected with the housing 102 via the hinge 107 such that an opening and closing movement of the lid according to the arrow 104 may be carried out such that the lid may adopt the opened status or the closed status.

In one embodiment, the cavity may be sized such that a luggage of a given extent or proportion may be located in the cavity, i.e. within the passenger seat element.

The handle 110 is shown in an extracted state and comprises a holding element 111 or a handhold. Thus, the passenger seat element may be torn resting on the floor and rolling on the rollers 140, of which, for the sake of clarity, is shown merely one. The passenger seat element may have at least a pair of rollers 140, wherein the second roller is not shown by Fig. 2.

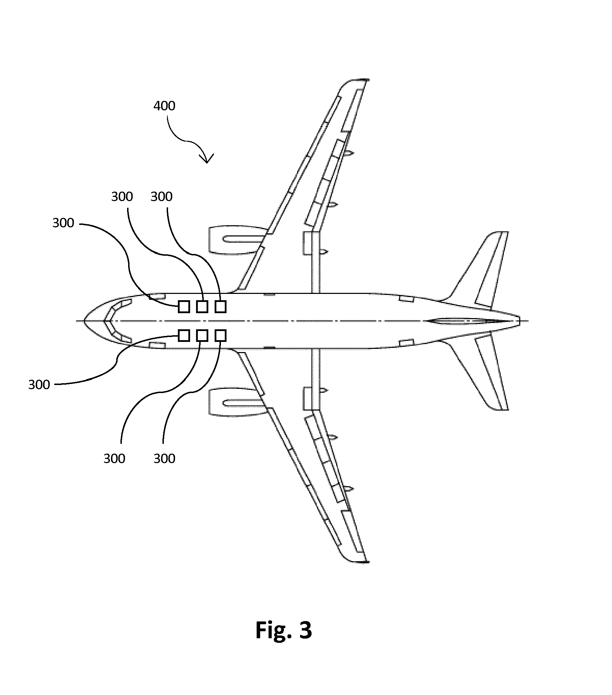

Fig. 3 shows an aircraft 400 with a multitude of seat arrangements 300 as described above and hereinafter. All of the seat arrangements of an aircraft may have a removable passenger seat element or a part of the seat arrangements of the aircraft may be seat arrangements as described above.

## Claims

1. Passenger seat element (100) for a seat arrangement (300), the passenger seat element comprising:
a housing (102) with a cavity (130); and
a lid (103);
wherein the lid is adapted to cover the cavity of the housing in a closed state of the lid and to uncover the cavity in an opened state of the lid;
wherein the cavity is adapted to accommodate an object (132) to be accommodated; and
wherein the passenger seat element is removably attachable to a seat frame (200) of the seat arrangement.

2. Passenger seat element according to claim 1, further comprising:
a fastening element (120); and
a securing element (125);
wherein the passenger seat element is removably attachable to the seat frame by the fastening element;
wherein the securing element is adapted to lock the passenger seat element to the seat frame in an attached state.

3. Passenger seat element according to any one of claims 1 or 2, further comprising:
a handle (110),
wherein the handle is configured to unlock the securing element from the seat frame such that the passenger seat element is removable from the seat frame.

4. Seat arrangement (300), comprising:
a passenger seat element (100) according to any one of claims 1 to 3; and
a seat frame (200);
wherein the passenger seat element is removably attached to the seat frame;
wherein the passenger seat element is removable by operating the handle and unlocking the securing element from the seat frame.

5. Aircraft (400), comprising a seat arrangement according to claim 4.
